# EUROPEAN PATENT SPECIFICATION

(11) **EP 0 492 287 B1**
(45) Date of publication and mention of the grant of the patent: **30.08.1995**
(21) Application number: 91121279.3
(22) Date of filing: 11.12.1991
(51) Int. Cl.: F16B 5/02, F16B 35/00, B60K 5/12, F02B 77/00

(54) **System for attaching a bracket to two separate parts of a mechanism, in particular the block and head of an internal combustion engine**
Vorrichtung zur Befestigung eines Trägers an zwei separaten Teilen eines Mechanismus, insbesondere Zylinderblock und Zylinderkopf einer Brennkraftmaschine
Système pour fixer un support à deux parties séparées d'un mécanisme, en particulier un bloc cylindre et une culasse d'un moteur à combustion interne

(30) Priority: 28.12.1990 IT 6807590
(43) Date of publication of application: 01.07.1992
(73) Proprietor: FIAT AUTO S.p.A., 10135 Torino (IT)
(72) Inventor: Milano, Giorgio, I-15045 Sale (IT); Menzio, Domenico, I-10100 Torino (IT)
(74) Representative: Cerbaro, Elena

(56) References cited:
- DE-A- 3 811 259
- US-A- 3 762 671

## Description

The present invention refers to a system for attaching a bracket to two parts of a mechanism, in particular to the block and head of an internal combustion engine.

The necessity to support the engines of vehicles and/or the parts or accessories thereof by brackets is known, for example for attachment to the body, see e.g. US-A-3 762 671. Some types of brackets must be fixed simultaneously integral both to the engine block and the head; in this case, since each engine often has small dimensional differences due to the working tolerances of the head and block, one can envisage the difficulty of fixing the bracket to these two parts of the engine, the bracket support surfaces of which can be out of alignment and/or, with the bracket mounted, conditions of stress can be generated which in use can produce a load on the bracket such as to result in failure from fatique.

An aim of the invention is to produce a system for attaching a bracket to two separate parts of a mechanism, capable of compensating for any dimensional differences which the said parts may have with respect to the design dimensions.

The abovementioned aim is achieved by the invention, which relates to a system for attaching a bracket to two separate parts of a mechanism. The system comprises at least a first and a second point of attachment of the bracket to respective first and second said separate parts of said mechanism, each point of attachment comprising a bolt housed through a clearance hole in said bracket and capable of being screwed into the corresponding part of the mechanism, characterised by the fact that said first point of attachment further comprises a bush subdivided into two parts by means of an oblique cut which has been effected on a plane forming with the axis of symmetry of said bush a non-right angle; said bush being inserted slidably in said clearance hole and housing within it said bolt, and having a first end provided with a shoulder capable of receiving in abutment against it a head of said bolt and a second end opposite to the first abutting against said first part of said mechanism.

For a better understanding of the invention, a non-limitative description is now given of one embodiment thereof, with reference to the appended drawings, in which:
figure 1 illustrates an axonometric projection of a bracket provided with the system of attachment according to the invention;
figure 2 illustrates a front view of the bracket of figure 1 of the system of attachment according to the invention;
figure 3 illustrates a side view in section through plane III-III of the bracket provided with the system of attachment according to the invention, fixed on one side to two parts of a mechanism; and
figure 4 illustrates a detail, on a larger scale, of figure 3.

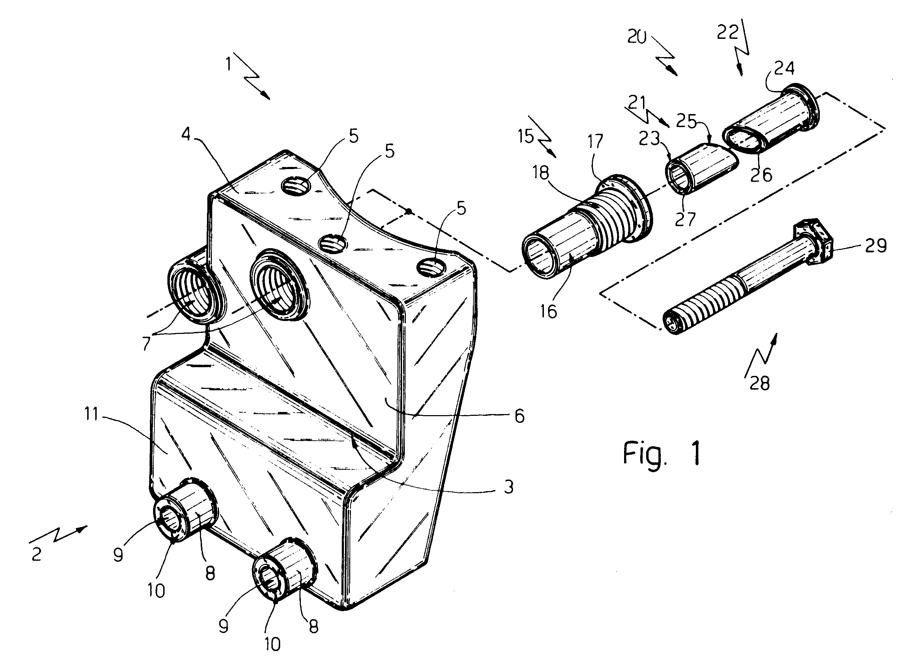

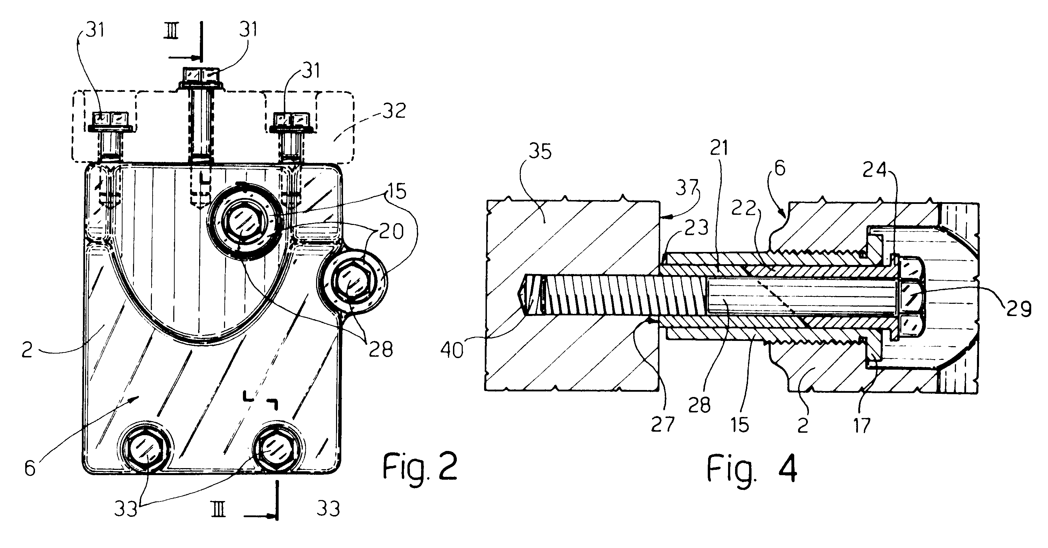

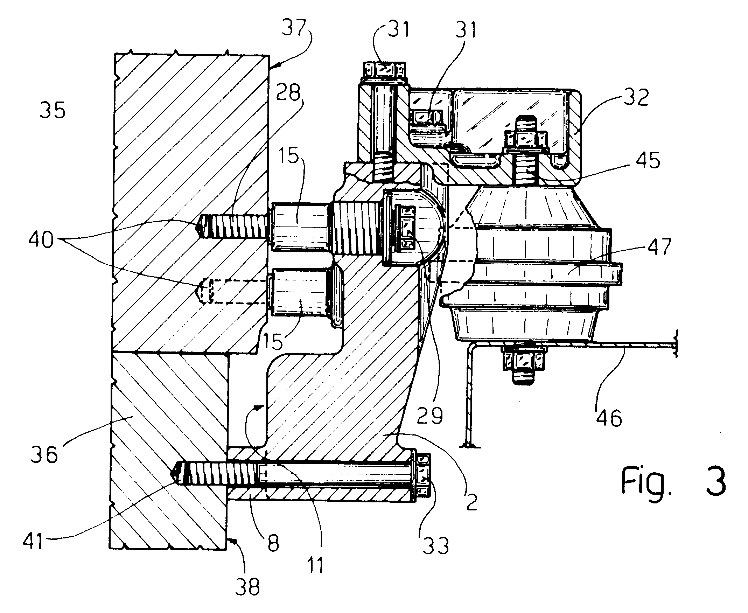

With reference to figures 1 to 4, there is indicated with 1 a system for attaching a bracket to two separate parts of a mechanism, for example (figure 3) a head 35 and a block 36 of a known internal combustion engine, not illustrated in detail for simplicity. The bracket 2 (figure 3) serves for example to support the said engine, effecting the attachment of parts 35,36 to a body 46 of a vehicle, also known and not illustrated for simplicity, for example by a known damper mount 47. In the non-limitative example illustrated, the bracket 2 is L-shaped, being delimited at the front, on the side coupling with parts 35,36, by a stepped surface 3, and also has an upper surface 4 on which are obtained blind threaded holes 5 to enable the fixture of bracket 2, by bolts 31 (figures 2 and 3), to a cross piece 32, of a known type, in turn attached to mount 47, on the side opposite to surface 3, by means of a bolt 45 (figure 3).

An upper part 6 of the front surface 3 of bracket 2 is set back from a corresponding lower part 11 thereof and in correspondence therewith the bracket 2 is provided with respective threaded clearance holes 7. In correspondence with the lower part 11, in particular in correspondence with respective collars 8 projecting therefrom, are obtained in bracket 2 and collars 8 further clearance holes 9 which exit on the respective front surfaces of shoulder 10 of collars 8.

The system of attachment 1 according to the invention comprises respective upper points of attachment of bracket 2 to head 35, and lower points of attachment of bracket 2 to block 36. In the example, the lower points of attachment are defined by clearance holes 9, in which are freely housed respective bolts 33 capable of being screwed into respective threaded holes 41 of block 36 to cause it to abut against shoulder surfaces 10 of collars 8. Vice versa, the upper points of attachment are defined by threaded holes 7 and by an assembly of further parts interconnected therewith, well illustrated in figures 1 and 4.

In particular, for each hole 7, the respective point of attachment comprises a second bush 15, having an external lateral surface 16 provided with a threaded section 18 and provided, at one end of said section 18, with a shoulder collar 17, and a first bush 20 inserted slidably inside bush 15, coaxial therewith. Bush 15 is screwed through the respective hole 7 by means of section 18, with the unthreaded part thereof projecting outside hole 7 from the side opposite collar 17, on the side of surface 3. The axial length of bush 20 is substantially greater than that of bush 15 and, according to the invention, is subdivided into two parts 21 and 22 by an oblique cut obtained thereon along a plane of section transversal to the axis of symmetry of the said bush 20 and forming therewith a non-right angle. On this plane are therefore defined two front facing surfaces 25 and 26 cooperating with each other (figures 1 and 4), which delimit on opposite sides respective parts 21 and 22. In particular, these surfaces 25,26 define on parts 21,22 respective inclined planes conjugate with each other, and part 21 projects axially from bush 20 towards surface 3 by an end 23 thereof, in correspondence with which it terminates with a flat front shoulder surface 27 opposite to 25. Part 22 vice versa is positioned projecting out from bush 15 by one end thereof opposite face 26 and is provided with a shoulder collar 24 whose external diameter is greater than the internal diameter of bush 15, so as to be capable if necessary of abutting against collar 17 of bush 15.

Each upper point of attachment is, in use, completed by a respective bolt 28, the length of which is substantially greater than the axial length of bush 20, provided at one end with a head 29 capable of abutting against collar 24 and, at the opposite end, capable of screwing into a corresponding threaded hole 40 of head 35. This bolt 28 is housed freely through bush 20 in such a manner as to hold the two parts sandwiched together.

In use, the system 1 also enables parts 35,36 to be attached, in the manner illustrated in figures 3 and 4, to the body 46 by means of the bracket 2 in the case in which parts 35,36 have respective surfaces 37,38, on which attachment holes 40,41 are obtained, out of alignment with each other by an amount depending on the working tolerances. In particular, bolts 33 are screwed into holes 41 through holes 9 in bracket 2 until they cause the surfaces 10 of collars 8 to abut against surface 38, thus ensuring the fixture of block 36 to bracket 2. At the same time bolt 28 is screwed into holes 40 until it causes heads 29 to abut against collars 24 and surfaces 27 to abut against surface 37, in such a manner as to secure parts 21,22 between heads 29 and surface 37. During this operation, parts 21,22 being able to slide inside bush 15 and the length of the latter being in each case less than that of the bush 20 (or the sum of the axial lengths of parts 21,22) any errors in alignment between surfaces 37,38 are compensated for by corresponding displacement of parts 21 (which are thrust by corresponding parts 22) which renders end 23 to project to a greater or lesser degree from bush 15. Finally, once parts 21,22 have assumed an appropriate axial position and surface 27 is caused to abut against it, the axial compression between the two parts 21,22 in correspondence with oblique surfaces 25,26 determines, by reason of the obliquity of the said surfaces, the elastic deformation of parts 21,22 consequently securing the said parts in bush 15, which causes them to be locked axially therein, as occurs with an expansion wall plug.

Finally the upper point of attachment, as a result of the presence of parts 21,22, behave as fixed points of attachment, like the lower ones, but in which the position of the surface in abutment during closure is self-adjusted as a function of the presence or otherwise of any errors in alignment. In other words, it is as if the assembly of parts 15,20 define collars analogous to 8, but in which the axial length is adjustable.

From what has been described the advantages connected with the invention are evident. The subdivision of bush 20 into two parts 21 and 22 by means of an oblique cut is a simple and inexpensive constructive expedient. At the same time it enables points of attachment to be obtained capable of adjusting to small errors in positioning between the head 35 and block 46 being supported, thus enabling systems of simultaneous attachment to both to be obtained by an attachment bracket without risk of generating stress loads on the said bracket and thus ensuring the reliability of durability of the attachment in operation.

According to a further embodiment of the present invention, not shown in the enclosed drawings, when the bracket 2 is assembled on the engined head 35 made in cast iron in place of alluminium alloy, bracket 2 can be assembled without using bush 15, having bush 20 directly housed in slidably manner in the interior through hole 7, which, in the case in point, is not threaded.

## Claims

1. A system for attaching a bracket (2) to two separate parts (35,36) of a mechanism, the system comprising at least a first and a second point of attachment of the bracket (2) to respectively a first and a second of said separate parts of said mechanism, each point of attachment comprising a bolt (28,33) housed freely through a clearance hole (7,9) in said bracket (2) and capable of being screwed into the corresponding part of the mechanism, characterised by the fact that said first point of attachment further comprises a bush (20) subdivided into two parts (21,22) by means of an oblique cut which has been effected on a plane forming a non-right angle with the axis of symmetry of said bush; said bush (20) being inserted slidably in said clearance hole (7) and housing said bolt (28) inside it, and having a first end provided with a shoulder (24) capable of receiving a head (29) of said bolt (28) abutting against it and a second end opposite to the first abutting against said part (35) of said mechanism.

2. A system of attachment according to claim 1, characterised by the fact that said first point of attachment further comprises a second bush (15) threaded externally and screwed into the corresponding said hole (7) of the bracket (2) and housing slidably within it said first bush (20); the length of said second bush (15) being less than that of said first bush (20).

3. A system of attachment according to claim 2, characterised by the fact that said second bush (15) is provided at one end with a shoulder collar (17) capable of abutting against said bracket (2).

4. A system of attachment according to any of the foregoing claims, characterised by the fact that said oblique cut defines on a first of said elements (21) comprising the bush (20) a first annular front surface (25) defining an inclined plane and on the second of said parts (22) defines a second inclined plane (26) conjugate with the first; said parts in use being secured by said bolt (28) between said first part (35) of said mechanism and said head (29) of said bolt (28) in such a manner as to deform elastically to determine the axial locking of said first bush (20) in said second bush (15).

5. A system of attachment according to any of the foregoing claims, characterised by the fact that it comprises two of said first points of attachment and two of said second points of attachment.

## Patentansprüche

1. System zum Befestigen eines Trägers (2) an zwei getrennten Teilen (35, 36) eines Mechanismus, wobei das System wenigstens einen ersten und einen zweiten Punkt für die Befestigung des Trägers (2) an einem ersten bzw. an einem zweiten der getrennten Teile des Mechanismus enthält, wobei jeder Befestigungspunkt einen Bolzen (28, 33) aufweist, der in einer Durchfallbohrung (7, 9) im Träger (2) mit Spiel untergebracht ist und in das entsprechende Teil des Mechanismus geschraubt werden kann, gekennzeichnet durch die Tatsache, daß der erste Befestigungspunkt ferner eine Buchse (20) enthält, die mittels eines schrägen Schnitts, der in einer Ebene ausgeführt ist, die mit der Symmetrieachse der Buchse einen von einem rechten Winkel verschiedenen Winkel bildet, in zwei Teile (21, 22) unterteilt ist, wobei die Buchse (20) in die Durchfallbohrung (7) gleitend eingeschoben ist und den Bolzen (28) in sich aufnimmt und ein erstes Ende, das mit einer Schulter (24) versehen ist, die einen gegen sie stoßenden Kopf (29) des Bolzens (28) aufnehmen kann, sowie ein zweites Ende aufweist, das dem ersten gegenüberliegt und an das Teil (35) des Mechanismus stößt.

2. Befestigungssystem nach Anspruch 1, gekennzeichnet durch die Tatsache, daß der erste Befestigungspunkt ferner eine zweite Buchse (15) enthält, die ein Außengewinde ausweist, in die entsprechende Bohrung (7) des Trägers (2) eingeschraubt ist und die erste Buchse (20) gleitend in sich aufnimmt, wobei die Länge der zweiten Buchse (15) kleiner als diejenige der ersten Buchse (20) ist.

3. Befestigungssystem nach Anspruch 2, gekennzeichnet durch die Tatsache, daß die zweite Buchse (15) an einem Ende mit einem schulterförmigen Flansch (17) versehen ist, der am Träger (2) anstoßen kann.

4. Befestigungssystem nach irgendeinem der vorangehenden Ansprüche, gekennzeichnet durch die Tatsache, daß der schräge Schnitt auf einem ersten (21) der die Buchse (20) umfassenden Elemente eine erste ringförmige Vorderfläche (25), die eine geneigte Ebene definiert, und am zweiten der Teile (22) eine zweite geneigte Ebene (26), die der ersten entspricht, definiert; wobei die Teile im Gebrauch durch den Bolzen (28) zwischen dem ersten Teil (35) des Mechanismus und dem Kopf (21) des Bolzens (28) in der Weise befestigt werden, daß sie sich elastisch verformen, um die axiale Verriegelung der ersten Buchse (20) in der zweiten Buchse (15) festzulegen.

5. Befestigungssystem nach irgendeinem der vorangehenden Ansprüche, gekennzeichnet durch die Tatsache, daß es zwei erste Befestigungspunkte und zwei zweite Befestigungspunkte enthält.

## Revendications

1. Système pour fixer un support (2) à deux parties séparées (35, 36) d'un mécanisme, le système comprenant au moins un premier et un second points de fixation du support (2) respectivement à une première et une seconde desdites parties séparées du mécanisme précité et chaque point de fixation comprenant un boulon (28, 33) logé librement à travers un trou traversant (7, 9) dans le support (2) et apte à être vissé dans la partie correspondante du mécanisme, caractérisé en ce que le premier point de fixation comprend en outre une douille (20) subdivisée en deux pièces (21, 22) au moyen d'une coupe oblique qui a été effectuée dans un plan faisant un angle, différent d'un angle droit, avec l'axe de symétrie de la douille, ladite douille (20) étant introduite, de façon à pouvoir coulisser, dans ledit trou traversant et contenant le boulon (28) à l'intérieur d'elle, et présentant une première extrémité munie d'une collerette (24) susceptible de recevoir la tête (29) du boulon (28) butant contre elle, et une seconde extrémité opposée à la première et butant contre la partie (35) dudit mécanisme.

2. Système de fixation selon la revendication 1, caractérisé en ce que le premier point de fixation comprend en outre une seconde douille (15) filetée extérieurement et vissée dans le trou correspondant (7) du support (2) et dans laquelle est logée, de façon à pouvoir coulisser, la première douille (20), la longueur de la seconde douille (15) étant inférieure à celle de la première douille (20).

3. Système de fixation selon la revendication 2, caractérisé en ce que la seconde douille (15) est munie, à une extrémité, d'une collerette à épaulement (17) apte à buter contre le support (2).

4. Système de fixation selon l'une quelconque des revendications précédentes, caractérisé en ce que la coupe oblique définit, sur la première (21) desdites pièces constituant la douille (20), une première surface annulaire frontale (25) définissant un plan incliné et, sur la seconde (22) desdites pièces, une seconde surface frontale (26) définissant un second plan incliné conjugué avec le premier, lesdites pièces étant, en service, assujetties par le boulon (28) entre la première partie (35) du mécanisme et la tête (29) du boulon (28) de façon à se déformer élastiquement pour déterminer le verrouillage axial de la première douille (20) dans la seconde douille (15).

5. Système de fixation selon l'une quelconque des revendications précédentes, caractérisé en ce qu'il comprend deux premiers points de fixation et deux seconds points de fixation.
